# EUROPÄISCHE PATENTSCHRIFT

(11) **EP 2 823 163 B1**
(45) Veröffentlichungstag und Bekanntmachung des Hinweises auf die Patenterteilung: **07.06.2017**
(21) Anmeldenummer: 13704579.5
(22) Anmeldetag: 08.02.2013
(51) Int. Cl.: F01N 3/08, F01N 3/28, F02D 9/04, B01D 46/00, B01D 53/04, B01D 53/75, F01N 3/10, F01N 3/021

(54) **ABGASREINIGUNGSVORRICHTUNG**
EXHAUST GAS PURIFICATION APPARATUS
DISPOSITIF DE PURIFICATION DE GAZ D'ÉCHAPPEMENT

(30) Priorität: 10.03.2012 DE 102012017178
(43) Veröffentlichungstag der Anmeldung: 14.01.2015
(73) Patentinhaber: Volkswagen Aktiengesellschaft, 38440 Wolfsburg (DE)
(72) Erfinder: TÖLLE, Stefan, 38154 Königslutter (DE)
(86) Internationale Anmeldenummer: PCT/EP2013/052547
(87) Internationale Veröffentlichungsnummer: WO 2013/135442

(56) Entgegenhaltungen:
- EP-A1- 1 524 031
- DE-A1- 10 324 618
- JP-A- H11 336 532
- US-A1- 2006 008 397

## Beschreibung

Die Erfindung betrifft eine Abgasreinigungsvorrichtung sowie eine solche umfassende Abgasanlage, insbesondere für Brennkraftmaschinen.

Im Stand der Technik sind Abgasreinigungsvorrichtungen bekannt, bei denen stromauf eines Abgaskonverters der Abgasweg durch ein Innenrohr in einen zentralen Strömungsweg sowie einen peripheren Strömungsweg unterteilt ist (z.B. DE 103 50 516 A). Dabei kann einer dieser parallelen Strömungswege, insbesondere der periphere Strömungsweg, einen Abgaskatalysator enthalten. Über geeignete Stellmittel kann der Abgasstrom durch den peripheren Strömungsweg durch die ringförmige Abgasreinigungseinrichtung geleitet werden oder zur Umgehung derselben durch den zentralen Strömungsweg. Eine solche Anordnung ist beispielsweise im Zusammenhang mit einem nachgeschalteten Drei-Wege-Katalysator bekannt, dem ein Adsorber für Kohlenwasserstoffe (HC-Adsorber) in einem der parallelen Strömungswege vorgeschaltet ist. Solange der Hauptkatalysator seine Arbeitstemperatur nach einem Motorstart noch nicht erreicht hat, wird der Abgasstrom über dem peripheren HC-Adsorber geleitet, der die im Abgas befindlichen Kohlenwasserstoffe zwischenspeichert. Sobald der nachgeschaltete Katalysator seine Arbeitstemperatur erreicht hat, wird der Abgasstrom durch den zentralen Strömungsweg geleitet, um den HC-Adsorber zu umgehen und diesen zu erwärmen. Wenn der HC-Adsorber seine Desorptionstemperatur erreicht hat, erfolgt wiederum eine vollständige oder teilweise Durchleitung des Abgases durch den HC-Adsorber, um die freigesetzten Kohlenwasserstoffe auszutragen und in den Hauptkatalysator zu transportieren, wo diese katalytisch umgesetzt werden. Diese Anordnung erlaubt eine sehr gute Reduzierung von HC-Startemissionen. Jedoch ist die Herstellung eines ringförmigen Katalysatorträgers relativ aufwändig.

DE 26 27 596 A beschreibt eine Halterung eines Katalysatorträgerkörpers in einem Katalysatorgehäuse, wobei über den Umfang der Stirnseiten des Katalysatorträgers jeweils ein Dichtungsring auf den Träger aufgesetzt ist, der sich zum Gehäuse konisch aufweitet und an diesem anliegt.

Aus JP11-336532 A ist eine Abgasreinigungsvorrichtung bekannt, bei der eine den Abgasströmungsweg teilende Trennplatte in eine in der Stirnseite des Trägerkörpers eingearbeitete Nut hineinragt, ohne den Trägerkörper zu berühren. Auf diese Weise sollen Querströmungen vermindert werden und gleichzeitig der Trägerkörper vor Beschädigungen geschützt werden.

Ebenfalls zur Stabilisierung des Trägerkörpers schlägt EP 1 524 031 A1 vor, Zellwände des Trägerkörpers in einem Bereich, an dem das Trennelement die Stirnseite des Trägerkörpers berührt, verstärkt auszuführen oder die Zellen in diesem Bereich zu verschließen.

Gemäß US 2006/0008397 A1 ist bei einer Abgasreinigungsvorrichtung mit interner Strömungsumkehr zwischen einem konischen Trennelement und der Stirnseite des Trägerkörpers eine Dichtung angeordnet.

Eine weitere Abgasreinigungsvorrichtung ist aus der Druckschrift DE 103 24 618 A1 bekannt.

Der vorliegenden Erfindung liegt die Aufgabe zugrunde, eine Abgasreinigungsvorrichtung mit der Möglichkeit paralleler schaltbarer Abgasführungen bereitzustellen, die Querströmungen des Abgases vermindert.

Die erfindungsgemäße Abgasreinigungsvorrichtung umfasst:
a) ein (mit einem Abgaskanal einer Brennkraftmaschine verbindbares oder verbundenes) von einem Abgasstrom durchströmbares Gehäuse;
b) eine in dem Gehäuse angeordnete Abgasreinigungskomponente, die einen von dem Abgasstrom durchströmbaren Trägerkörper mit einer eingangsseitige und einer ausgangsseitige Stirnfläche aufweist;
c) zumindest ein stromauf der Abgasreinigungskomponente angeordnetes Trennelement, welches einen Abgasströmungsweg in zumindest zwei parallele Strömungswege teilt; und
d) wenigstens ein im Bereich der eingangsseitigen Stirnfläche des Trägerkörpers und/oder eines stromabwärtigen Endes des Trennelements vorhandenes Dichtungsmittel, welches geeignet ist, einer Querströmung des Abgasstroms zwischen den zumindest zwei parallelen Strömungswegen entgegenzuwirken.

Dabei umfasst das wenigstens eine Dichtungsmittel ein an dem stromabwärtigen Ende des Trennelements befestigtes und an die Stirnfläche des Trägerkörpers elastisch anliegendes Dichtungselement. Erfindungsgemäß weist das Dichtungselement entweder ein Bürstenelement mit einer Vielzahl von Borsten auf, welche an der Stirnseite des Tragkörpers anliegen, oder ein Federblech auf, das eine Vielzahl in axialer Richtung schräg verlaufender Langschlitze aufweist.

Durch das Vorhandensein des/der Dichtungsmittel/s wird die Querströmung des Abgasstroms zwischen den dem Trägerkörper vorgeschalteten Strömungswegen verhindert oder sogar vollständig unterbunden. Somit sind die wenigstens zwei parallelen Strömungswege stromauf der Abgasreinigungskomponente bis zur eingangsseitigen Stirnseite ihres Trägerkörpers voneinander getrennt. Auf diese Weise gelingt es, bestimmte Zonen des Trägerkörpers gezielt mit Abgas zu beaufschlagen, während andere Bereiche nicht vom Abgas durchströmt werden.

Bei der Abdichtung der zwei oder mehr Strömungswege voneinander sind insbesondere die hohen auftretenden Temperaturen sowie die großen auftretenden, betriebspunktabhängigen Temperaturunterschiede zu berücksichtigen. Insbesondere führen die Temperaturunterschiede zu signifikanten Wärmeausdehnungen der verschiedenen Komponenten. Aus diesem Grunde verbietet sich ein direktes Anliegen des stromabwärtigen Endes des Trennelements der parallelen Strömungswege auf die Stirnfläche des Trägerkörpers, da dies zu hohen Spannungen bis zur Beschädigung der Komponenten führen könnte.

Erfindungsgemäß umfasst das wenigstens eine Dichtungsmittel ein an dem stromabwärtigen Ende des Trägerelements befestigtes Dichtelement, welches an die Stirnseite des Trägerkörpers oder - im Falle des Vorhandenseins einer im Trägerkörper eingearbeiteten Nut (s.u.) - an die Nut (den Nutboden) elastisch anliegt. Dabei wird im Rahmen der vorliegenden Erfindung unter dem Begriff "elastisch anliegend" eine reversible Nachgiebigkeit des Dichtelements in axialer Richtung verstanden, durch welche den im Betrieb der Abgasreinigungsvorrichtung zu erwartenden Wärmeausdehnungen der Komponenten Rechnung getragen wird. Vorzugsweise wird die axiale elastische Nachgiebigkeit des Dichtelements so gewählt, dass auch bei einem temperaturbedingten maximal zu erwartenden Abstand zwischen Trennelement und Trägerkörper noch ein Kontakt zwischen Dichtelement und Trägerkörper besteht.

Nach einer ersten Ausgestaltung umfasst ein solches Dichtelement ein Bürstenelement mit einer Vielzahl von Borsten, welche an die Stirnseite des Trägerkörpers oder gegebenenfalls an die Nut (insbesondere den Nutboden) des Trägerkörpers anliegen. Dabei können die Borsten etwa als Metalldrähte ausgebildet sein, beispielsweise aus Edelstahl, Nickel oder einer Nickellegierung. Anzahl und Dichte der Borsten sind dabei so zu wählen, dass eine ausreichende Dichtwirkung zwischen den Strömungswegen erzielt wird.

In einer alternativen Ausgestaltung umfasst das Dichtelement ein Federblech, das eine Vielzahl von Langschlitzen aufweist, die in axialer Richtung (das heißt in Strömungsrichtung des Abgases) schräg verlaufen, also mit einem Neigungswinkel bezüglich der axialen Richtung. Die sich durch die Langschlitze ergebende lamellare Struktur des Federblechs sorgt für eine gewisse Elastizität in axialer Richtung und somit für eine Abdichtwirkung auch bei verschiedenen Temperaturen und Ausdehnungen der Bauteile. Das Federblech besteht vorzugsweise aus einem hitze- und korrosionsbeständigem Material, beispielsweise Edelstahl, Nickel oder einer Nickellegierung. In weiterer Ausbildung umfasst das Dichtelement ferner eine Dichtungsmatte, welche das Federblech zumindest einseitig umschließt. Auf diese Weise wird die Querströmung durch die Langschlitze des Federblechs noch weiter vermindert und eine mechanische Dämpfung erzielt. Als Materialien für die Dichtungsmatte kommen insbesondere Keramik- und Glasfasern in Frage.

In einer bevorzugten Ausführung der Erfindung umfasst das wenigstens eine Dichtungsmittel ferner zumindest eine im Trägerkörper eingearbeitete Nut, in welche das elastisch anliegende (an dem Trennelement befestigtes) Dichtungselement der oben genannten Art hineinragt. Aufgrund der bereits angesprochenen Wärmeausdehnungen der Bauteile endet das stromabwärtige Ende des Trennelements vorzugsweise mit einem gewissen Abstand, also berührungslos zum Nutboden. Die Ausgestaltung des Dichtungsmittels in Form einer Nut im Trägerkörper entspricht in ihrer Wirkungsweise einer Labyrinthdichtung (auch Spaltdichtung genannt), bei der die Querströmung des Abgasstroms zwischen den Strömungswegen durch Umlenkungen und Verlängerung des Strömungsweges im abzudichtenden Spalt und der Ausbildung von Prallflächen vermindert wird.

Die Aufteilung des Strömungsweges stromauf der Abgasreinigungskomponente kann in Form verschiedener Geometrien realisiert sein. Nach einer ersten Ausgestaltung ist das Trennelement als Innenrohr, beispielsweise mit rundem oder ovalem Querschnitt, ausgebildet und innen liegend, vorzugsweise koaxial in dem Gehäuse angeordnet. Ebenso ist denkbar, zwei oder mehrere Innenrohre mit unterschiedlichen Durchmessern konzentrisch anzuordnen, so dass im Betrieb die Abgasreinigungskomponente in Form mehrerer separater Ringzonen angeströmt wird. In alternativer Ausgestaltung ist das Trennelement als eine, das Gehäuse radial (zentral oder dezentral) durchlaufende Trennwand ausgebildet, die eine planare oder eine beliebig andere konturierte Gestaltung aufweisen kann. Beispielsweise kann eine planare, das Gehäuse zentral durchlaufende Trennwand vorgesehen sein, so dass der Abgasweg in zwei Strömungswegen in Form von Halbkreisen oder Halbellipsen unterteilt wird. Ebenso können mehrere parallel verlaufende Trennwände vorgesehen sein oder mehrere sich schneidende Trennwände, welche den Strömungsweg in Kreissegmente unterteilen. Grundsätzlich wird im Rahmen der vorliegenden Erfindung der Begriff "parallele Strömungswege" nicht im strengen geometrischen Sinn verstanden, sondern strömungstechnisch im Sinne von wahlweise durchströmbar.

Nach einer bevorzugten Ausgestaltung der Erfindung weist der Trägerkörper der Abgasreinigungskomponente im Bereich einer axialen Projektion des Trennelements auf den Trägerkörper eine im Wesentlichen strömungsundurchlässige Zone auf. Dabei wird unter dem Begriff "axiale Projektion des Trennelements" die gedachte Anschlussfläche des Trennelements verstanden, wenn dieses fiktiv in Strömungsrichtung des Abgases verlängert wird und somit die Stirnfläche des Trägerkörpers berühren würde. Die axiale Projektion des Trennelements auf den Trägerkörper entspricht gleichsam dem "Windschatten" des Trennelements. Durch das Vorhandensein der strömungsundurchlässigen Zone wird die Abdichtwirkung der Vorrichtung hinsichtlich einer Querströmung des Abgases zwischen den parallelen Strömungswegen noch weiter reduziert. Eine solche strömungsundurchlässige Zone lässt sich beispielsweise dadurch realisieren, dass der Trägerkörper eine Vielzahl von axial verlaufenden Strömungskanälen aufweist, die im Bereich der strömungsundurchlässigen Zone entweder nicht vorhanden sind oder eingangsseitig verschlossen sind.

In bevorzugter Ausgestaltung der Erfindung weist die Abgasreinigungskomponente in radialer Richtung zumindest zwei Zonen mit unterschiedlichen Funktionalitäten auf, wobei diese Zonen den zumindest zwei vorgeschalteten Strömungswegen entsprechen, das heißt im Wesentlichen mit diesen fluchten. Auf diese Weise kann der Abgasstrom wahlweise gezielt auf bestimmte Zonen der Abgasreinigungskomponente gelenkt werden, um gezielt Funktionalitäten zu nutzen. Insbesondere können die Zonen der Abgasreinigungskomponenten mit der Funktionalität eines Abgaskatalysators, beispielsweise eines Oxidationskatalysators, eines Reduktionskatalysators oder eines Drei-Wege-Katalysators; eines Adsorbers, beispielsweise eines HC-Adsorbers oder eines NOₓ-Adsorbers; oder eines Partikelfilters ausgebildet sein. Derartige Funktionalitäten sind in bekannter Weise durch geeignete Beschichtungen und/oder geometrische Ausgestaltungen der Strömungskanäle realisierbar. Wahlweise können die Zonen der Abgasreinigungskomponente auch eine funktionsfreie Zone umfassen, durch die das Abgas lediglich durchgeleitet wird, ohne dass katalytische Funktionen oder Rückhaltefunktionen zum Tragen kommen.

In einer speziellen Ausgestaltung besitzt eine erste Zone die Funktionalität eines HC-Adsorbers und eine zweite Zone die Funktionalität eines Drei-Wege-Katalysators oder ist funktionsfrei. In dieser Ausgestaltung dient die HC-Adsorberzone der Zurückhaltung von Kohlenwasserstoffen nach einem Kaltstart der Brennkraftmaschine. Sobald ein vorgeschalteter Vorkatalysator oder eben der Drei-Wege-Katalysator der zweiten Zone zumindest bereichsweise seine Betriebstemperatur erreicht hat, erfolgt eine Umschaltung des Abgasstroms durch die zweite Zone unter Umgehung der HC-Adsorberzone. Wenn sodann auch ein nachgeschalteter Drei-Wege-Katalysator oder Oxidationskatalysator seine Betriebstemperatur erreicht hat, erfolgt wiederum die Umlenkung des Abgasstroms über den HC-Adsorber der ersten Zone, so dass die Kohlenwasserstoffe desorbieren und im nachgeschalteten Katalysator umgesetzt werden.

Die Erfindung betrifft gemäß einem weiteren Aspekt eine Abgasanlage, insbesondere für eine Brennkraftmaschine, die eine Abgasreinigungsvorrichtung gemäß der Erfindung umfasst. Mit Vorteil kann die Abgasanlage teil eines Kraftfahrzeugs sein.

Weitere vorteilhafte Ausgestaltungen der Erfindung sind Gegenstand der übrigen Unteransprüche.

Die Erfindung wird nachfolgend anhand von Ausführungsbeispielen näher erläutert. Es zeigen:
- Figur 1: eine perspektivische, teilweise aufgeschnittene Ansicht einer erfindungsgemäßen Abgasreinigungsvorrichtung gemäß einer ersten Ausgestaltung mit einem ringförmigen Bürstenelement als Dichtungsmittel bei (A) zentraler Durchströmung und (B) peripherer Durchströmung,
- Figur 2: eine perspektivische, teilweise aufgeschnittene Ansicht einer erfindungsgemäßen Abgasreinigungsvorrichtung gemäß einer zweiten Ausgestaltung mit einem geraden Bürstenelement als Dichtungsmittel bei (A) Durchströmung des ersten Strömungsweges und (B) Durchströmung des zweiten Strömungsweges,
- Figur 3: eine erfindungsgemäße Abgasreinigungsvorrichtung gemäß einer dritten Ausgestaltung mit einem Federring als Dichtungsmittel (A) in einer perspektivischen, teilweise aufgeschnittenen Ansicht, (B) als Detailausschnitt und (C) Detailansicht des Federrings;
- Figur 4: eine erfindungsgemäße Abgasreinigungsvorrichtung gemäß einer vierten Ausgestaltung mit einem geraden Federblech als Dichtungsmittel (A) in einer perspektivischen, teilweise aufgeschnittenen Ansicht, (B) Detailansicht der Trennwand mit Federblech, (C) Detailausschnitt der Trennwand mit Federblech und (D) Detailansicht des Federblechs; und
- Figur 5: eine erfindungsgemäße Abgasreinigungsvorrichtung gemäß einer fünften Ausgestaltung mit einem ringförmigen Bürstenelement und Ringnut im Trägerkörper als Dichtungsmittel (A) in einer perspektivischen, teilweise aufgeschnittenen Ansicht und (B) als Detailausschnitt.

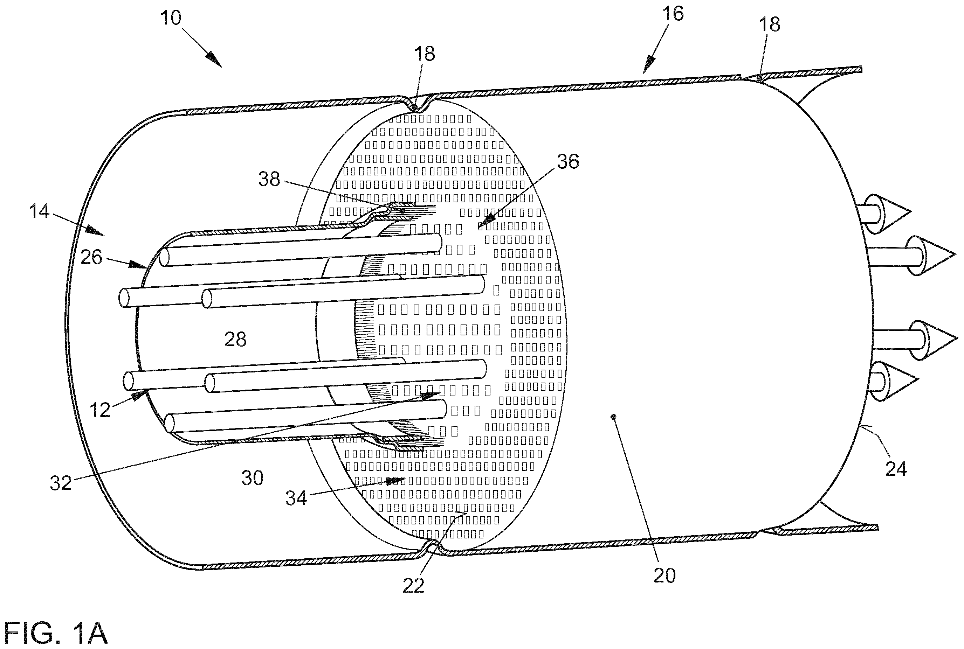

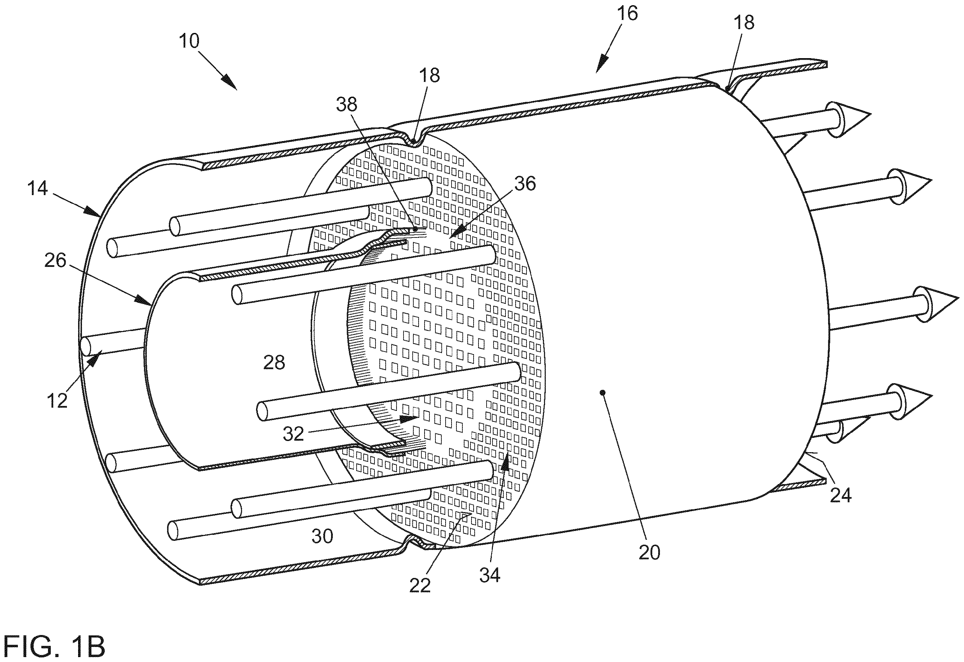

Zunächst soll anhand der Figuren 1A und 1B eine Abgasreinigungsvorrichtung gemäß einer ersten Ausgestaltung der Erfindung erläutert werden, bei der die Dichtungsmittel ein ringförmiges Bürstenelement umfassen.

Die in den Figuren 1A und 1B gezeigte Abgasreinigungsvorrichtung 10 umfasst ein von einem Abgasstrom (angedeutet mit 12) in der Darstellung von links nach rechts durchströmbares Gehäuse 14. Das Gehäuse 14 besitzt einen hier kreisrunden Querschnitt, kann jedoch auch eine beliebige andere Gestalt, beispielsweise einen ovalen Querschnitt aufweisen. Das Gehäuse 14 kann einstückig oder in bekannter Weise aus mehreren Teilen, insbesondere aus zwei Halbschalen, zusammengefügt sein. Das Gehäuse 14 ist mit einem hier nicht dargestellten Abgaskanal einer Brennkraftmaschine verbunden, wofür es beispielsweise an seinem ebenfalls nicht dargestellten Einlass- und Auslassbereich Flanschanschlüsse aufweisen kann. Gegebenenfalls kann das Gehäuse 14 auch konisch sich verengende Eingangs- und Ausgangstrichter aufweisen, welche den Strömungsquerschnitt auf den des Abgaskanals verengen.

In dem Gehäuse 14 ist eine Abgasreinigungskomponente 16 angeordnet, die in axialer Richtung, also in Strömungsrichtung des Abgases 12, durch zwei Querschnittsverengungen (Einschnürungen) 18 im Gehäuse 14 fixiert wird. Eine weitere Fixierung und Stoßdämpfung der Abgasreinigungskomponente 16 kann in bekannter Weise durch ihre radiale Umhüllung mit einer hier nicht dargestellten Matte, insbesondere einer sogenannten Blähmatte, erzielt werden.

Die Abgasreinigungskomponente 16 umfasst einen Trägerkörper 20 mit einer eingangsseitigen Stirnfläche 22 sowie einer ausgangsseitigen Stirnfläche 24. Der Trägerkörper 20 weist eine Vielzahl von Strömungskanälen auf, die den Trägerkörper in axialer Richtung durchsetzen. Beispielsweise kann der Trägerkörper 20 als ein aus einem keramischen Werkstoff bestehender Monolith ausgebildet sein. Alternativ sind auch Trägerkörper einsetzbar, welche aus einem gewickelten Metallblech hergestellt sind. Die Wände der Strömungskanäle können eine Beschichtung (so genannter Washcoat) aufweisen, welche der Abgasreinigungskomponente 16 eine gewünschte Funktionalität verleihen. Beispielsweise kann die Beschichtung eine katalytisch wirkende Komponente, insbesondere ein Edelmetall oder eine Speicherkomponente zur reversiblen Speicherung bestimmter Abgaskomponenten umfassen. Ebenso kann der Trägerkörper 20 durch geeignete Gestaltung der Strömungskanäle eine Partikelrückhaltefunktion aufweisen.

Stromauf der Abgasreinigungskomponente 16 ist innerhalb des Gehäuses 14 ein Trennelement 26 angeordnet, welches den Strömungsweg des Abgases in zwei parallele Strömungswege teilt. Im vorliegenden Beispiel ist das Trennelement als ein Innenrohr 26 ausgebildet, das den Abgasströmungsweg in einen zentralen Strömungsweg 28 sowie einen ringförmigen, peripheren Strömungsweg 30 teilt. Die Abgasreinigungsvorrichtung 10 umfasst ferner hier nicht dargestellte Mittel, mit denen der Abgasstrom wahlweise in den ersten Strömungsweg 28 oder den zweiten Strömungsweg 30 gelenkt werden kann. Optional können diese Mittel auch stufenlos verstellbar ausgebildet sein, so dass eine beliebige Aufteilung des Abgasstroms auf die beiden Strömungswege 28, 30 möglich ist. Beispielsweise können diese Umlenkmittel eine stellbare Klappe umfassen, die an einem Eingangsbereich des Innenrohrs 26 angeordnet ist. Ein Beispiel für eine geeignete Anordnung ist in DE 10 350 516 A1 beschrieben. In der in Figur 1A dargestellten Stellung wird der Abgasstrom 12 durch den ersten, zentralen Strömungsweg 28 geleitet, während gemäß Figur 1B das Abgas durch den zweiten, peripheren Strömungsweg 30 geleitet wird.

Entsprechend der Wahl des Strömungsweges 28 oder 30 trifft das Abgas auf verschiedene Zonen des Trägerkörpers 20, nämlich auf eine erste Zone 32, die einem dem ersten Strömungsweg 28 entsprechenden zentralen Bereich des Trägerkörpers 20 umfasst, oder auf eine zweite Zone 34, die eine dem zweiten Strömungsweg 30 entsprechende ringförmige Geometrie aufweist.

Die verschiedenen Zonen 32, 34 der Abgasreinigungskomponente 16 können hinsichtlich Ihrer Beschichtung und/oder geometrischen Ausgestaltung ihrer Strömungskanäle unterschiedliche Funktionalitäten aufweisen. In spezieller Ausführung kann beispielsweise die periphere ringförmige Zone 34 eine HC-Adsorber-Beschichtung aufweisen, so dass bis zu einer bestimmten Temperaturgrenze Kohlenwasserstoffe reversibel adsorbiert werden. Gleichzeitig kann die zentrale Zone 32 funktionsfrei sein, das heißt keine Beschichtung aufweisen, oder eine drei-wege-katalytische Beschichtung besitzen. Ebenso können die Durchmesser und Zelldichten der Strömungskanäle der verschiedenen Zonen 32, 34 unterschiedlich gewählt sein. Beispielsweise können wie hier dargestellt die Strömungskanäle der peripheren Zone 34 kleiner und mit einer höheren Zellzahl ausgebildet sein, als die der zentralen Zone 32. Durch die geringeren Durchmesser und die höhere Zelldichte, wird eine höhere spezifische Oberfläche und damit ein höherer Wirkungsgrad der katalytischen Beschichtung erzielt.

In dem gezeigten Beispiel weist der Trägerkörper 20 eine strömungsundurchlässige Zone 36 auf, die sich dadurch auszeichnet, dass in ihrem Bereich keine Strömungskanäle im Trägerkörper 20 vorhanden sind oder diese eingangsseitig verschlossen sind. Die strömungsundurchlässige Zone 36 entspricht in ihrer Anordnung einer axialen Projektion des Innenrohrs 26 auf den Trägerkörper 20 oder - anders ausgedrückt - dem "Strömungsschatten" des Trennelements 26. Zusammen mit den noch zu erläuternden Dichtungsmitteln sorgt die strömungsundurchlässige Zone 36 für eine Verminderung einer Querströmung des Abgasstroms 12 zwischen den Strömungswegen 28 und 30.

Erfindungsgemäß sind im Bereich der eingangsseitigen Stirnfläche 22 des Trägerkörpers 20 und/oder des stromabwärtigen Endes des Trennelements 26 Dichtungsmittel 38 vorgesehen, welche der Querströmung des Abgases zwischen den parallelen Strömungswegen 28 und 30 entgegenwirken. Im vorliegenden Beispiel der Figuren 1A und 1B ist dieses Dichtungsmittel als ein Bürstenelement 38 ausgebildet, hier in Form eines ringförmigen Bürstenelements. Das Bürstenelement 38 umfasst eine Vielzahl von Borsten, die an die Stirnseite 22 des Trägerkörpers 20, insbesondere an der strömungsundurchlässigen Zone 36 elastisch anliegen. Die Borsten bestehen aus einem hitzebeständigen und chemischen inerten Material, beispielsweise aus einem Edelstahl, aus Nickel oder aus einer Nickellegierung. Das Bürstenelement 38 kann wie hier dargestellt durch ein am stromabwärtigen Ende des Innenrohrs 26 angeschweißtes Ringblech eingefasst bzw. eingepresst werden. Andere Befestigungsmöglichkeiten des Dichtungsmittels 38 an das Trennelement 26 sind selbstverständlich ebenso denkbar.

Durch das Dichtungsmittel 38 ist eine gezielte Anströmung der Zonen 32 und 34 unter weitestgehender Vermeidung von Leckageströmen möglich. Gleichzeitig wird durch die elastische Ausbildung des Dichtungsmittels 38 ein direkter Kontakt des Trennelements 26 mit der Stirnfläche 22 des Trägerkörpers 20 vermieden. Auf diese Weise werden thermische Spannungen zwischen diesen Bauteilen und deren Beschädigung verhindert.

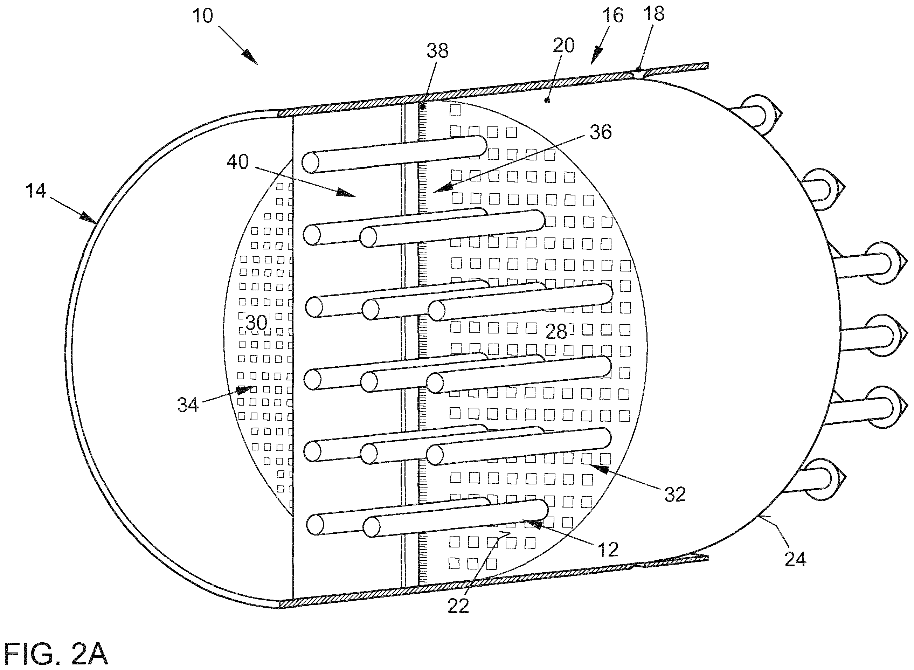

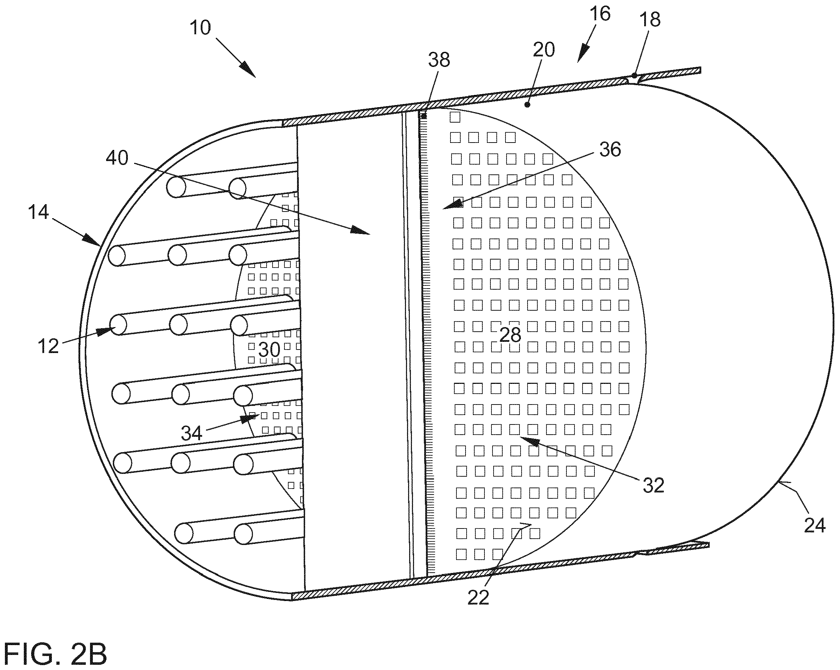

Anhand der Figuren 2A und 2B soll eine Abgasreinigungsvorrichtung gemäß einer zweiten Ausgestaltung der Erfindung erläutert werden, bei der die Dichtungsmittel ein flach ausgestaltetes Bürstenelement umfassen. Wie auch in den nachfolgenden Figuren werden für übereinstimmende Elemente die gleichen Bezugszeichen wie in den vorstehenden Figuren verwendet und nicht noch einmal im Einzelnen erläutert.

Anders als gemäß der in den Figuren 1A und 1B gezeigten Ausführung ist hier das Trennelement als eine, das Gehäuse 14 radial und zentral durchlaufende Trennwand 40 ausgebildet. Obwohl die dargestellte Trennwand 40 eine plane Gestalt aufweist, sind auch andere Konturen denkbar. Die Trennwand 40 teilt den Abgasstrom in zwei radial benachbarte Strömungswege 28, 30, die hier jeweils die Form eines Halbzylinders aufweisen. Eine Umschaltung des Abgasstroms in einen der beiden Strömungswege 28, 30 kann hier beispielsweise durch eine am stromaufwärtigen Bereich der Trennwand 40 angelenkte Abgasklappe (Klappenventil) erfolgen (nicht dargestellt). In Abweichung von der dargestellten Ausführung kann die Trennwand 40 auch dezentral angeordnet sein, so dass unterschiedlich große Abgasströmungswege entstehen. Ebenso ist eine Ausführung mit mehr als einer Trennwand 40 möglich, so dass drei oder mehr Strömungswege ausgebildet werden und die Abgasreinigungskomponente 16 mehr als zwei angeströmte Zonen ausbildet.

Entsprechend der geraden Ausgestaltung der Trennwand 40, weist das Bürstenelement 38 ebenfalls eine gerade verlaufende Form auf. Davon abgesehen kann das Bürstenelement 38 wie in Figur 1A und B beschrieben ausgestaltet sein.

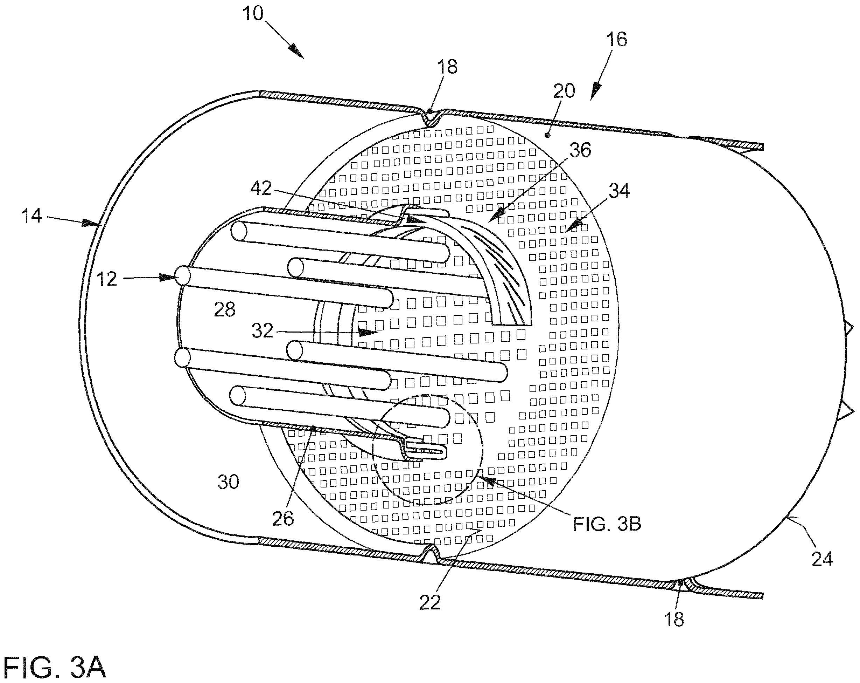

Eine dritte Ausgestaltung der Abgasreinigungsvorrichtung gemäß der vorliegenden Erfindung wird anhand der Figuren 3A bis 3C erläutert.

Ähnlich wie in der ersten Ausführung gemäß den Figuren 1A und 1B ist auch in der dritten Ausführungsform das Trennelement als ein koaxial im Gehäuse 14 angeordnetes Innenrohr 26 ausgebildet. Im Unterschied zu den Figuren 1A und 1B umfassen die Dichtungsmittel gemäß der dritten Ausgestaltung jedoch ein als Federblech 42 ausgebildetes Dichtungselement.

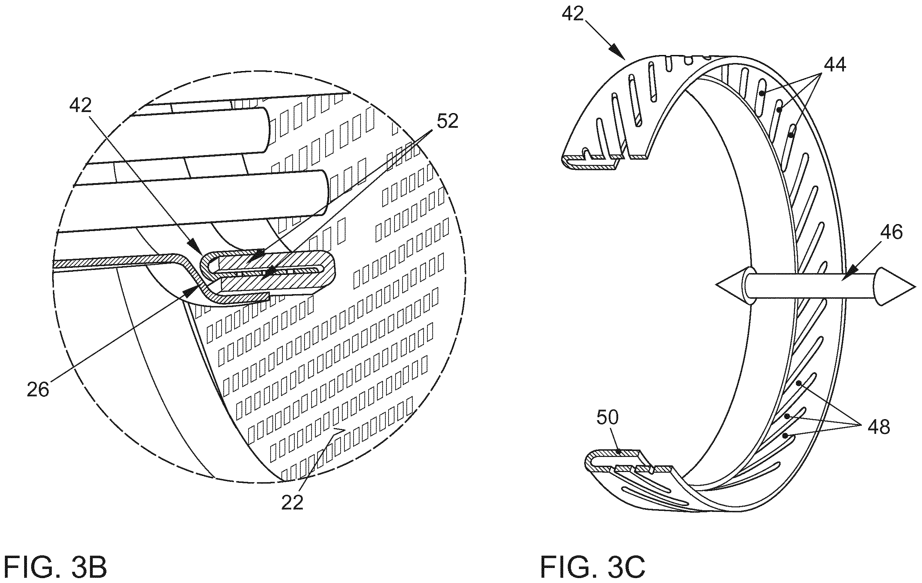

Das in Figur 3C in Einzelansicht näher dargestellte Federblech 42 weist eine Vielzahl von Langschlitzen 44 auf, die bezüglich der axialen Richtung (angedeutet durch den Doppelpfeil 46) auf einer parallelen Ebene jedoch schräg, also mit einem Neigungswinkel, zur axialen Richtung 46 verlaufen. Zwischen jeweils zwei Langschlitzen 44 wird jeweils eine Lamelle 48 ausgebildet. Aufgrund der durch die Langschlitze 44 verursachten Materialschwächung ist das Federblech 42 in axialer Richtung 46 elastisch nachgiebig. Das Federblech 42, das grundsätzlich aus den gleichen Materialien bestehen kann wie das Bürstenelement gemäß der ersten und zweiten Ausgestaltung der Erfindung, kann optional noch einen umgebogenen Abschnitt 50 aufweisen, dessen Funktion aus der Detailansicht in Figur 3B deutlich wird.

Figur 3B zeigt einen Ausschnitt des stromabwärtigen Endes des Innenrohres 26, das in diesem Bereich eine Querschnittserweiterung aufweist, welche das ringförmige Federblech 42 einfasst. Beispielsweise kann das Federblech 42 in diesem Bereich mit dem Innenrohr 26 verschweißt sein. Wie aus Figur 3B ersichtlich ist, ist der die Langschlitze 44 aufweisende Bereich des Federblechs 42 beidseitig von einer Dichtungsmatte 52 umschlossen. Dabei werden die Enden der Dichtungsmatte 52 zwischen dem Innenrohr 26 und dem Federblech 42 einerseits und dem Federblech 42 und seinem umgeschlagenen Abschnitt 50 andererseits verpresst. Das Federblech 42 beziehungsweise die Dichtungsmatte 52 liegen an der Stirnfläche 22 des Trägerkörpers 20, insbesondere an der strömungsundurchlässigen Zone 36, elastisch nachgiebig an. Obwohl bereits durch das Federblech 42 allein eine signifikante Verminderung der Querströmung zwischen den Strömungswegen 28 und 30 erzielt wird, sorgt die Dichtungsmatte 52 für einen weiteren Abdichtungseffekt. Zusätzlich bewirkt die Dichtungsmatte 52 eine weitere Stoßdämpfung zwischen dem Innenrohr 26 und dem Trägerkörper 20 und der Vermeidung von Spannungen.

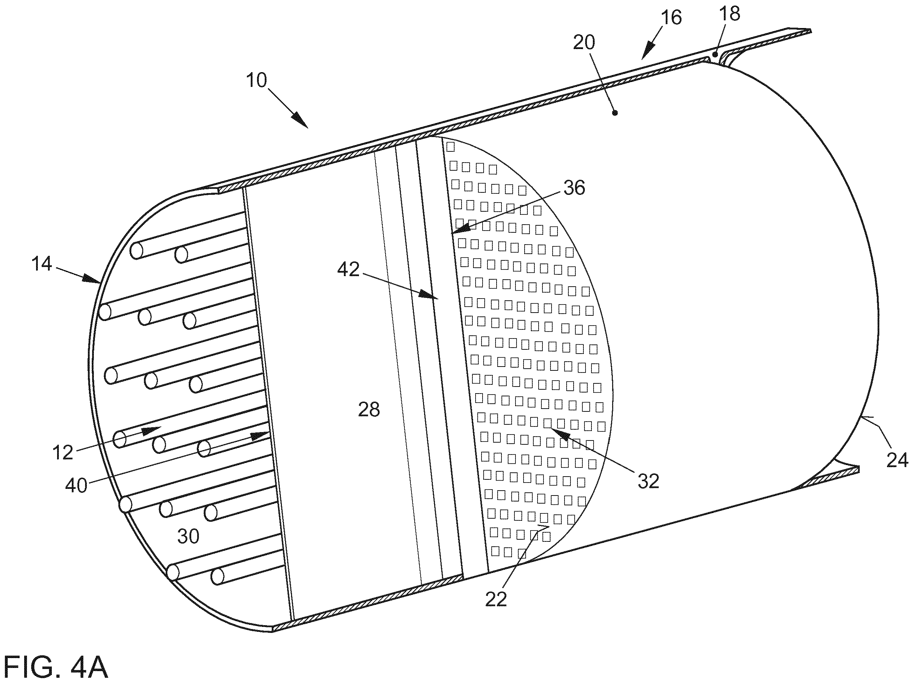

Eine Abgasreinigungsvorrichtung 10 gemäß einer vierten Ausgestaltung der Erfindung ist anhand der Figuren 4A bis 4D erläutert. Ebenso wie in der zweiten Ausgestaltung der Erfindung (siehe Figuren 2A und 2B) ist auch hier das Trennelement als eine planare Trennwand 40 ausgebildet, welche den Strömungsweg in zwei parallele, radial benachbarte Strömungswege 28 und 30 teilt. Dementsprechend weist auch das an ihrem stromabwärtigen Ende angeordnete Federblech 42 eine ebene Gestalt auf.

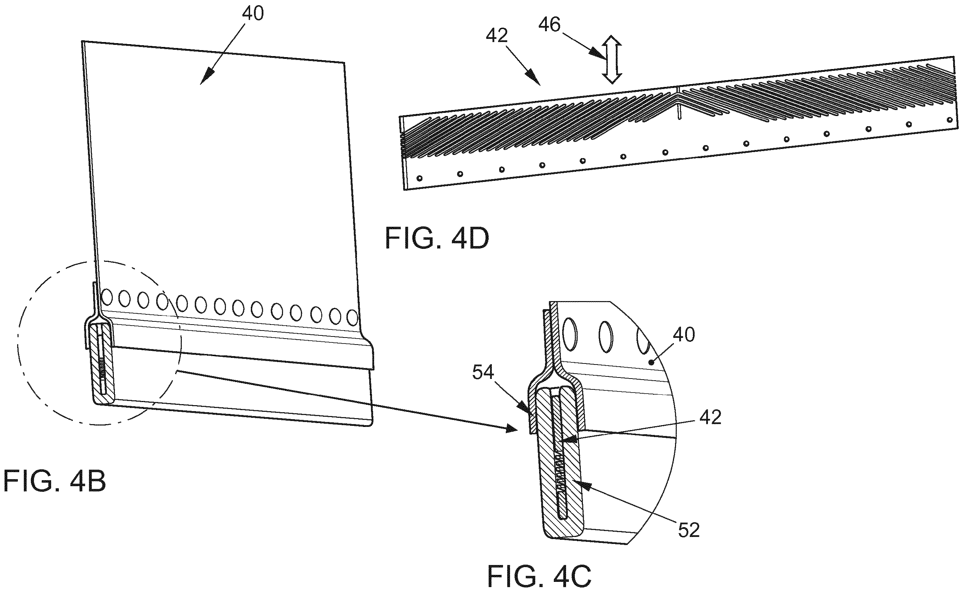

Eine Einzelansicht eines Beispiels eines solchen Federblechs 42 mit einem beispielhaften Anordnungsmuster der Langschlitze 44 ist in Figur 4D gezeigt. Durch die Vielzahl der schräg verlaufenden Langschlitze 44 ist das Federblech 42 in axialer Richtung 46 elastisch stauchbar.

Wie aus den Figuren 4B und 4C hervorgeht, kann das Federblech 42 von einer Dichtungsmatte 52 umhüllt sein. Das Gefüge aus Federblech 42 und Dichtungsmatte 52 ist zwischen dem Endabschnitt der Trennwand 40 und einem mit diesem verschweißten Halteblech 54 eingepresst.

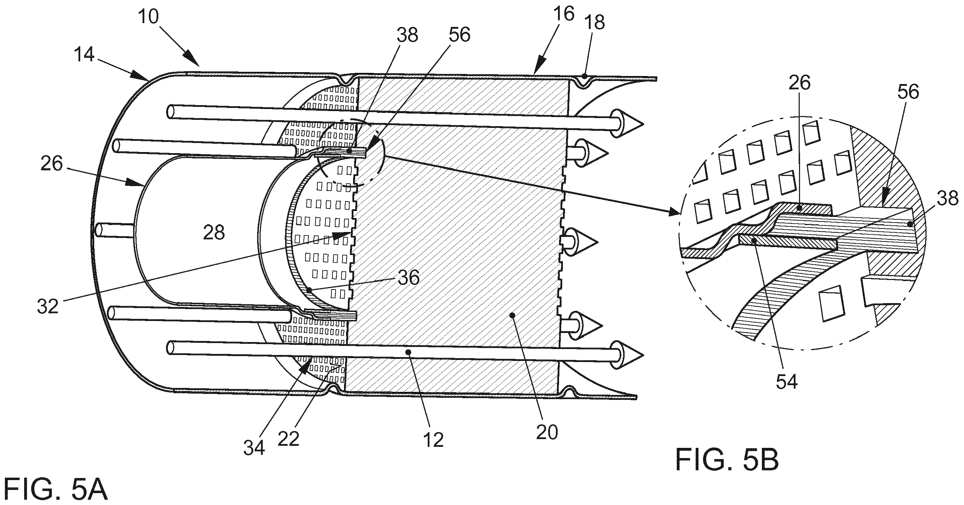

Eine fünfte Ausgestaltung der Erfindung ist in den Figuren 5A und 5B dargestellt. Die hier dargestellte Abgasreinigungsvorrichtung 10 entspricht im Wesentlichen der ersten Ausgestaltung gemäß den Figuren 1A und 1B. Insbesondere ist das Innenrohr 26 an seinem stromabwärtigen Ende mit einem ringförmigen Bürstenelement 38 ausgestattet, welches durch ein angeschweißtes Halteblech 54 eingepresst ist (siehe Detailausschnitt Figur 5B). Im Unterschied zur ersten Ausgestaltung zeichnet sich die fünfte Ausgestaltung der Abgasreinigungsvorrichtung 10 jedoch durch eine Nut 56 aus, welche im Trägerkörper 20, und zwar im Bereich seiner Stirnfläche 22 eingearbeitet ist. In die Nut 56 ragt das als Bürstenelement 38 ausgebildete Dichtungsmittel ein. Dabei liegt das Bürstenelement 38 vorzugsweise an dem Nutboden der Nut 56 an. Die fünfte Ausgestaltung der Abgasreinigungsvorrichtung kombiniert die durch die Nut 56 hervorgerufene Funktion einer Labyrinthdichtung mit der Dichtungswirkung eines Dichtungselements, hier in Form der Bürste 38.

### Bezugszeichenliste

- 10: Abgasreinigungsvorrichtung
- 12: Abgasstrom
- 14: Gehäuse
- 16: Abgasreinigungskomponente
- 18: Querschnittsverengung / Einschnürung
- 20: Trägerkörper
- 22: eingangsseitige Stirnfläche
- 24: ausgangsseitige Stirnfläche
- 26: Trennelement / Innenrohr
- 28: erster Strömungsweg
- 30: zweiter Strömungsweg
- 32: erste Zone der Abgasreinigungskomponente
- 34: zweite Zone der Abgasreinigungskomponente
- 36: strömungsundurchlässige Zone
- 38: Dichtungselement / Bürstenelement
- 40: Trennelement / Trennwand
- 42: Dichtungselement / Federblech
- 44: Langschlitz
- 46: axiale Richtung
- 48: Lamelle
- 50: umgeschlagener Abschnitt
- 52: Dichtungsmatte
- 54: Halteblech
- 56: Nut

## Patentansprüche

1. Abgasreinigungsvorrichtung (10) umfassend
a) ein von einem Abgasstrom (12) durchströmbares Gehäuse (14);
b) eine in dem Gehäuse (14) angeordnete Abgasreinigungskomponente (16), die einen von dem Abgasstrom (12) durchströmbaren Trägerkörper (20) mit einer eingangsseitigen und einer ausgangsseitigen Stirnfläche (22, 24) aufweist;
c) zumindest ein stromauf der Abgasreinigungskomponente (16) angeordnetes Trennelement (26, 40), welches einen Abgasströmungsweg in zumindest zwei parallele Strömungswege (28, 30) teilt; sowie
d) wenigstens ein im Bereich der eingangsseitigen Stirnfläche (22) des Trägerkörpers (20) und/oder eines stromabwärtigen Endes des Trennelements (26, 40) vorhandenes Dichtungsmittel (38, 56), welches geeignet ist, einer Querströmung des Abgasstroms (12) zwischen den zumindest zwei parallelen Strömungswegen (28, 30) entgegenzuwirken,
**wobei** das wenigstens eine Dichtungsmittel (38, 56) ein an dem stromabwärtigen Ende des Trennelements (26, 40) befestigtes und an die Stirnfläche (22) des Trägerkörpers (20) elastisch anliegendes Dichtungselement (38) umfasst, **dadurch gekennzeichnet, dass** das Dichtungselement (38) ein Bürstenelement (38) mit einer Vielzahl von Borsten umfasst, welche an der Stirnfläche (22) des Tragkörpers (20) anliegen.

2. Abgasreinigungsvorrichtung (10) umfassend
a) ein von einem Abgasstrom (12) durchströmbares Gehäuse (14);
b) eine in dem Gehäuse (14) angeordnete Abgasreinigungskomponente (16), die einen von dem Abgasstrom (12) durchströmbaren Trägerkörper (20) mit einer eingangsseitigen und einer ausgangsseitigen Stirnfläche (22, 24) aufweist;
c) zumindest ein stromauf der Abgasreinigungskomponente (16) angeordnetes Trennelement (26, 40), welches einen Abgasströmungsweg in zumindest zwei parallele Strömungswege (28, 30) teilt; sowie
d) wenigstens ein im Bereich der eingangsseitigen Stirnfläche (22) des Trägerkörpers (20) und/oder eines stromabwärtigen Endes des Trennelements (26, 40) vorhandenes Dichtungsmittel (42, 56), welches geeignet ist, einer Querströmung des Abgasstroms (12) zwischen den zumindest zwei parallelen Strömungswegen (28, 30) entgegenzuwirken,
wobei das wenigstens eine Dichtungsmittel (42, 56) ein an dem stromabwärtigen Ende des Trennelements (26, 40) befestigtes und an die Stirnfläche (22) des Trägerkörpers (20) elastisch anliegendes Dichtungselement (42) umfasst, **dadurch gekennzeichnet, dass** das Dichtungselement (42) ein Federblech (42) umfasst, das eine Vielzahl in axialer Richtung schräg verlaufender Langschlitze (44) aufweist.

3. Abgasreinigungsvorrichtung (10) nach Anspruch 1, wobei das wenigstens eine Dichtungsmittel (38, 56) ferner zumindest eine im Trägerkörper (20) eingearbeitete Nut (56) umfasst, in welche das Dichtungselement (38) hineinragt.

4. Abgasreinigungsvorrichtung (10) nach Anspruch 3, wobei das wenigstens eine elastisch anliegende Dichtungselement (38) an die Nut (56) des Trägerkörpers (20) anliegt.

5. Abgasreinigungsvorrichtung (10) nach Anspruch 2, ferner umfassend eine das Federblech (42) umschließende Dichtungsmatte (52).

6. Abgasreinigungsvorrichtung (10) nach einem der Ansprüche 1 bis 5, wobei das Trennelement (26, 40) als Innenrohr (26) ausgebildet ist, das insbesondere koaxial in dem Gehäuse angeordnet ist.

7. Abgasreinigungsvorrichtung (10) nach einem der Ansprüche 1 bis 5, wobei das Trennelement (26, 40) als planare oder beliebig konturierte, das Gehäuse (14) radial durchlaufende Trennwand (40) ausgebildet ist.

8. Abgasreinigungsvorrichtung (10) nach einem der vorhergehenden Ansprüche, wobei der Trägerkörper (20) im Bereich einer axialen Projektion des Trennelements (26) auf den Trägerkörper (20) eine strömungsundurchlässige Zone (36) aufweist.

9. Abgasreinigungsvorrichtung (10) nach einem der vorhergehenden Ansprüche, wobei die Abgasreinigungskomponente (16) in radialer Richtung zumindest zwei Zonen (32, 34) unterschiedlicher Funktionalitäten aufweist, wobei diese Zonen (32, 34) mit den zumindest zwei Strömungswegen (28, 30) fluchten.

10. Abgasreinigungsvorrichtung (10) nach Anspruch 9, wobei die Zonen (32, 34) der Abgasreinigungskomponente (16) mit der Funktionalität eines Abgaskatalysators, eines Adsorbers, eines Partikelfilters, oder funktionsfrei ausgebildet sind.

11. Abgasreinigungsvorrichtung (10) nach Anspruch 10, wobei eine erste Zone die Funktionalität eines HC-Adsorbers besitzt und eine zweite Zone die Funktionalität eines Drei-Wege-Katalysators besitzt oder funktionsfrei ist.

12. Abgasanlage umfassend eine Abgasreinigungsvorrichtung (10) nach einem der Ansprüche 1 bis 11.

## Claims

1. Exhaust-gas purification device (10) comprising
a) a housing (14) through which an exhaust-gas stream (12) can flow;
b) an exhaust-gas purification component (16) which is arranged in the housing (14) and which has a substrate body (20), through which substrate body the exhaust-gas stream (12) can flow and which substrate body has an inlet-side and an outlet-side face surface (22, 24);
c) at least one separating element (26, 40) which is arranged upstream of the exhaust-gas purification component (16) and which divides an exhaust-gas flow path into at least two parallel flow paths (28, 30); and
d) at least one seal means (38, 56) which is arranged in the region of the inlet-side face surface (22) of the substrate body (20) and/or of a downstream end of the separating element (26, 40) and which is suitable for counteracting a cross-flow of the exhaust-gas stream (12) between the at least two parallel flow paths (28, 30),
wherein the at least one seal means (38, 56) comprises a seal element (38) which is fastened to the downstream end of the separating element (26, 40) and which abuts elastically against the face surface (22) of the substrate body (20), **characterized in that** the seal element (38) comprises a brush element (38) with a multiplicity of bristles which abut against the face surface (22) of the substrate body (20).

2. Exhaust-gas purification device (10) comprising
a) a housing (14) through which an exhaust-gas stream (12) can flow;
b) an exhaust-gas purification component (16) which is arranged in the housing (14) and which has a substrate body (20), through which substrate body the exhaust-gas stream (12) can flow and which substrate body has an inlet-side and an outlet-side face surface (22, 24);
c) at least one separating element (26, 40) which is arranged upstream of the exhaust-gas purification component (16) and which divides an exhaust-gas flow path into at least two parallel flow paths (28, 30); and
d) at least one seal means (42, 56) which is arranged in the region of the inlet-side face surface (22) of the substrate body (20) and/or of a downstream end of the separating element (26, 40) and which is suitable for counteracting a cross-flow of the exhaust-gas stream (12) between the at least two parallel flow paths (28, 30),
wherein the at least one seal means (42, 56) comprises a seal element (42) which is fastened to the downstream end of the separating element (26, 40) and which abuts elastically against the face surface (22) of the substrate body (20), **characterized in that** the seal element (42) comprises a spring plate (42) which has a multiplicity of elongate slots (44) running obliquely in an axial direction.

3. Exhaust-gas purification device (10) according to Claim 1, wherein the at least one seal means (38, 56) furthermore comprises at least one groove (56) which is formed in the substrate body (20) and into which the seal element (38) projects.

4. Exhaust-gas purification device (10) according to Claim 3, wherein the at least one elastically abutting seal element (38) abuts against the groove (56) of the substrate body (20).

5. Exhaust-gas purification device (10) according to Claim 2, furthermore comprising a seal mat (52) which surrounds the spring plate (42).

6. Exhaust-gas purification device (10) according to one of Claims 1 to 5, wherein the separating element (26, 40) is in the form of an inner tube (26) which is arranged in particular coaxially in the housing.

7. Exhaust-gas purification device (10) according to one of Claims 1 to 5, wherein the separating element (26, 40) is in the form of a planar or arbitrarily contoured separating wall (40) which runs radially through the housing (14).

8. Exhaust-gas purification device (10) according to one of the preceding claims, wherein the substrate body (20) has, in the region of an axial projection of the separating element (26) onto the substrate body (20), a zone (36) which is impermeable to flow.

9. Exhaust-gas purification device (10) according to one of the preceding claims, wherein the exhaust-gas purification component (16) has, in a radial direction, at least two zones (32, 34) of different functionalities, wherein said zones (32, 34) are aligned with the at least two flow paths (28, 30).

10. Exhaust-gas purification device (10) according to Claim 9, wherein the zones (32, 34) of the exhaust-gas purification component (16) are formed with the functionality of an exhaust gas catalytic converter, of an adsorber, of a particle filter or without a function.

11. Exhaust-gas purification device (10) according to Claim 10, wherein a first zone has the functionality of an HC adsorber and a second zone has the functionality of a three-way catalytic converter or has no function.

12. Exhaust-gas system comprising an exhaust-gas purification device (10) according to one of Claims 1 to 11.

## Revendications

1. Dispositif de purification de gaz d'échappement (10) comprenant:
a) un boîtier (14) pouvant être parcouru par un courant de gaz d'échappement (12);
b) un composant de purification de gaz d'échappement (16) disposé dans le boîtier (14), qui présente un corps porteur (20) pouvant être parcouru par le courant de gaz d'échappement (12) avec une face frontale d'entrée et une face frontale de sortie (22, 24);
c) au moins un élément de séparation (26, 40) disposé en amont du composant de purification de gaz d'échappement (16), qui divise un chemin d'écoulement de gaz d'échappement en au moins deux chemins d'écoulement parallèles (28, 30); ainsi que
d) au moins un moyen d'étanchéité (38, 56) se trouvant dans la région de la face frontale d'entrée (22) du corps porteur (20) et/ou d'une extrémité aval de l'élément de séparation (26, 40), qui est approprié pour s'opposer à un écoulement transversal du courant de gaz d'échappement (12) entre lesdits au moins deux chemins d'écoulement parallèles (28, 30),
dans lequel ledit au moins un moyen d'étanchéité (38, 56) comprend un élément d'étanchéité (38) fixé à l'extrémité aval de l'élément de séparation (26, 40) et appliqué élastiquement sur la face frontale (22) du corps porteur (20),
**caractérisé en ce que** l'élément d'étanchéité (38) comprend un élément de brosse (38) avec une multiplicité de poils, qui sont appliqués sur la face frontale (22) du corps porteur (20).

2. Dispositif de purification de gaz d'échappement (10) comprenant:
a) un boîtier (14) pouvant être parcouru par un courant de gaz d'échappement (12);
b) un composant de purification de gaz d'échappement (16) disposé dans le boîtier (14), qui présente un corps porteur (20) pouvant être parcouru par le courant de gaz d'échappement (12) avec une face frontale d'entrée et une face frontale de sortie (22, 24);
c) au moins un élément de séparation (26, 40) disposé en amont du composant de purification de gaz d'échappement (16), qui divise un chemin d'écoulement de gaz d'échappement en au moins deux chemins d'écoulement parallèles (28, 30); ainsi que
d) au moins un moyen d'étanchéité (42, 56) se trouvant dans la région de la face frontale d'entrée (22) du corps porteur (20) et/ou d'une extrémité aval de l'élément de séparation (26, 40), qui est approprié pour s'opposer à un écoulement transversal du courant de gaz d'échappement (12) entre lesdits au moins deux chemins d'écoulement parallèles (28, 30),
dans lequel ledit au moins un moyen d'étanchéité (42, 56) comprend un élément d'étanchéité (42) fixé à l'extrémité aval de l'élément de séparation (26, 40) et appliqué élastiquement sur la face frontale (22) du corps porteur (20),
**caractérisé en ce que** l'élément d'étanchéité (42) comprend une tôle élastique (42), qui présente une multiplicité de fentes longitudinales (44) s'étendant en oblique en direction axiale.

3. Dispositif de purification de gaz d'échappement (10) selon la revendication 1, dans lequel ledit au moins un moyen d'étanchéité (38, 56) comprend en outre au moins une rainure (56) taillée dans le corps porteur (20), dans laquelle l'élément d'étanchéité (38) pénètre.

4. Dispositif de purification de gaz d'échappement (10) selon la revendication 3, dans lequel ledit au moins un élément d'étanchéité appliqué élastiquement (38) s'applique sur la rainure (56) du corps porteur (20).

5. Dispositif de purification de gaz d'échappement (10) selon la revendication 2, comprenant en outre un tapis d'étanchéité (52) enveloppant la tôle élastique (42).

6. Dispositif de purification de gaz d'échappement (10) selon l'une quelconque des revendications 1 à 5, dans lequel l'élément de séparation (26, 40) est réalisé sous forme de tube intérieur (26), qui est disposé en particulier de façon coaxiale dans le boîtier.

7. Dispositif de purification de gaz d'échappement (10) selon l'une quelconque des revendications 1 à 5, dans lequel l'élément de séparation (26, 40) est réalisé sous la forme d'une paroi de séparation (40) plane ou avec un contour quelconque, traversant radialement le boîtier (14).

8. Dispositif de purification de gaz d'échappement (10) selon l'une quelconque des revendications précédentes, dans lequel le corps porteur (20) présente, dans la région d'une projection axiale de l'élément de séparation (26) sur le corps porteur (20), une zone (36) imperméable à l'écoulement.

9. Dispositif de purification de gaz d'échappement (10) selon l'une quelconque des revendications précédentes, dans lequel le composant de purification de gaz d'échappement (16) présente en direction radiale au moins deux zones (32, 34) offrant différentes fonctionnalités, dans lequel ces zones (32, 34) sont en alignement avec lesdits au moins deux chemins d'écoulement (28, 30).

10. Dispositif de purification de gaz d'échappement (10) selon la revendication 9, dans lequel les zones (32, 34) du composant de purification de gaz d'échappement (16) sont réalisées avec la fonctionnalité d'un catalyseur de gaz d'échappement, d'un adsorbeur, d'un filtre à particules ou n'ont pas de fonction.

11. Dispositif de purification de gaz d'échappement (10) selon la revendication 10, dans lequel la première zone possède la fonctionnalité d'un adsorbeur HC et une deuxième zone possède la fonctionnalité d'un catalyseur à trois voies ou n'a pas de fonction.

12. Installation de gaz d'échappement comprenant un dispositif de purification de gaz d'échappement (10) selon l'une quelconque des revendications 1 à 11.
